# EUROPEAN PATENT SPECIFICATION

(11) **EP 3 608 738 B1**
(45) Date of publication and mention of the grant of the patent: **28.07.2021**
(21) Application number: 18781542.8
(22) Date of filing: 30.03.2018
(51) Int. Cl.: G05B 19/4093

(54) **LASER MACHINING SYSTEM AND LASER MACHINING METHOD**
LASERBEARBEITUNGSSYSTEM UND LASERBEARBEITUNGSVERFAHREN
SYSTÈME D'USINAGE AU LASER ET PROCÉDÉ D'USINAGE AU LASER

(30) Priority: 04.04.2017 JP 2017074305
(43) Date of publication of application: 12.02.2020
(73) Proprietor: Amada Holdings Co., Ltd., Isehara-shi, Kanagawa 259-1196 (JP)
(72) Inventor: SAEKI, Shuichi, Isehara-shi Kanagawa 259-1196 (JP); NARITA, Naoyasu, Isehara-shi Kanagawa 259-1196 (JP)
(74) Representative: Grünecker Patent- und Rechtsanwälte PartG mbB
(86) International application number: PCT/JP2018/013702
(87) International publication number: WO 2018/186301

(56) References cited:
- EP-A1- 1 157 793
- EP-A1- 1 524 063
- JP-A- H0 913 100
- JP-A- H07 299 682
- JP-A- 2003 071 580
- JP-A- 2005 189 932
- JP-A- 2005 327 010
- JP-A- 2010 181 941
- JP-A- 2011 018 205
- JP-A- 2015 149 011
- US-A1- 2012 109 352
- US-A1- 2014 375 794

## Description

### [Technical Field]

The present invention relates to a laser processing system and a laser processing method that lay out a product to process on a plate-like material or a workpiece and conduct laser processing on the material, and particularly, to a laser processing system and a laser processing method capable of efficiently laying out a product to process on a workpiece such as a remainder material.

### [Background Art]

In laser processing by a laser processing system, when the number of products in a lot to process is small or when there is only one piece of product to process, a worker may search a remainder yard for a remainder of proper size and use the remainder for laser processing.

The remainder occurs after forming a product from a material by, for example, blanking.

When using such a remainder for laser processing, the worker places the remainder on a pallet of a laser processor, checks a spot such as an LED marker emitted from a laser head to a laser focal position, positions a processing part so that a product to process may come within a processible range of the remainder, feeds back the positional information to a processing program, and carries out laser processing according to the processing program.

EP1157793A1 relates to an apparatus and a method for adjusting a marker to the surface of a material. US2012109352A1 relates to a nesting data generation device that generates nesting data for cutting off a part from a work supported by plural support projections.

### [Prior Art Document]

### [Patent Literature]

Patent Literature 1: Japanese Unexamined Patent Application Publication No. 2000-163111
Patent Literature 2: Japanese Unexamined Patent Application Publication No. 2014-48044

### [Summary of the Invention]

However, the above-mentioned work of positioning a processing part by a worker in the laser processing that uses a workpiece such as a remainder involves a problem of requiring skill and is difficult for an inexperienced worker.

Namely, when a product to process has a complicated shape or when the product must be rotated and positioned on a remainder which has already been holed, it is hard and requires skill for a worker to position the product on the remainder without interfering with the holes.

In more detail, the worker must first grasp the size of a rectangle of the product, put a tape rule on the remainder, and confirm whether or not the product interferes with the holes of the remainder. These steps take time. In addition, if the holes of the remainder are complicated and if the product to process has a complicated shape, it is difficult to determine whether or not the product is processible without interfering with the holes of the remainder.

Also, if a processible area of the remainder is away from a position where the worker stands, it will be difficult for the worker to put the tape rule on the remainder, and when actually carrying out the laser processing, a processed part may overlap the holes of the remainder to cause a problem of producing an unacceptable product.

Since the program is manually prepared, the laser processing may come out of the processible area of the remainder in the middle of the laser processing. In such a case, problems will occur that the remainder must be discarded by halting the laser processing in the middle and that the laser processing must be again carried out.

Further, there is a big problem that occurs when a laser processing trace overlaps vertexes of a skid supporting the remainder. If this happens, the remainder and skid are welded together and the vertexes of the skid melt to cause process defects.

In consideration of the above-mentioned circumstances, an object of the present invention is to provide a laser processing system and a laser processing method capable of, even when employing a remainder for laser-processing a product, efficiently laying out the product on the remainder without skill and without causing process defects.

In order to solve the problems mentioned above, a laser processing method for irradiating a material with a laser beam and laser-processing the material according to claim 1 and a laser processing system for irradiating a material with a laser beam and laser-processing the material according to claim 2 is provided. Preferred embodiments are defined in the dependent claims.

A feature of the present invention is a laser processing system for irradiating a material with a laser beam and laser-processing the material, comprising: a projection means to project on the material an image of a product to process; and a correction means to move and correct the image projected by the projection means, wherein after determining a position of the projected image with respect to the material, processing data is generated.

Another feature of the present invention is that the projection means projects, together with the image of the product to process, an image of vertex positions of a processing pallet skid on which the material is placed.

Another feature of the present invention is that the correction means shifts or rotates the image projected by the projection means.

Another feature of the present invention is that, according to the projected image moved and corrected by the correction means, the processing data is corrected.

Another feature of the present invention is that the material is a remainder that occurs after processing a product, and on the remainder, the image of the product to process is projected to determine whether or not a processing position of the product to process is appropriate.

Another feature of the present invention is that the projection means projects the image of the product to process selectively on materials placed at different locations.

Another feature of the present invention is a laser processing method in a laser processing system for irradiating a material with a laser beam and laser-processing the material, comprising: projecting, by a projection means, an image of a product to process on the material; determining whether or not a processing position of the product to process is appropriate; and if the processing position of the product to process is inappropriate, moving and correcting, by a correction means, the projected image on the material, wherein after determining a position of the projected image with respect to the material, and processing data is generated.

### [Brief Description of Drawings]

[Fig. 1] Fig. 1 is a schematic diagram showing a laser processing system in which a laser processing method is embodied according to the present invention.
[Fig. 2] Fig. 2 is a schematic diagram showing a processing side 1a of a laser processor 1 shown in Fig. 1.
[Fig. 3] Fig. 3 is a functional block diagram showing an NC device 5 shown in Fig. 1.
[Fig. 4] Fig. 4 is a schematic diagram showing a projector 1e shown in Fig. 1.
[Fig. 5] Fig. 5 is an explanatory diagram showing a state that the projector 1e shown in Fig. 1 projects on a material W an image of a product to process.
[Fig. 6] Fig. 6 is a flowchart showing a laser processing method embodied according to the present invention.
[Fig. 7] Fig. 7 is a schematic plan view showing an example of an image of a product projected by projection mapping on a material W.
[Fig. 8] Fig. 8 is a schematic plan view showing an example of a shifted image of the product projected by projection mapping on the material W.
[Fig. 9] Fig. 9 is a schematic diagram showing a fingertip operable wireless mouse 7.

### [Description of Embodiments]

Hereinafter, embodiments according to the present invention will be explained with reference to the drawings.

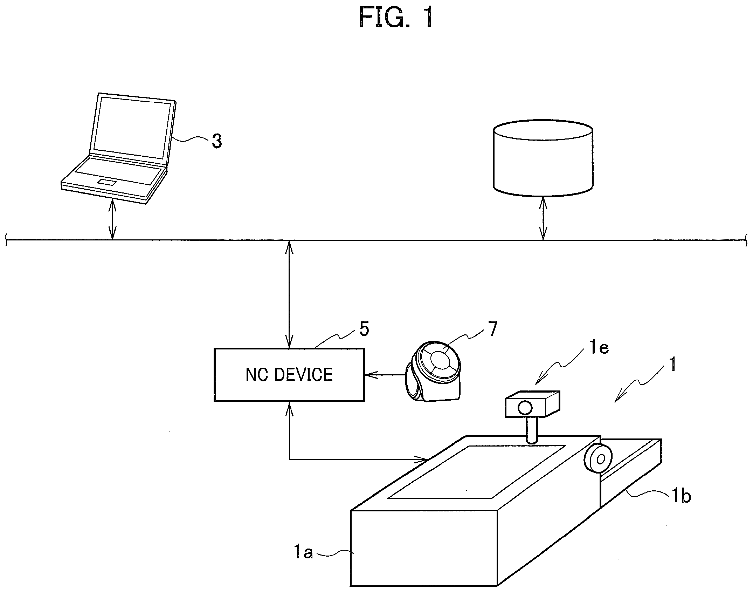

Figure 1 is a schematic diagram showing a laser processing system in which a laser processing method is embodied according to the present invention.

As shown in Fig. 1, the laser processing system includes a laser processor 1, a CAM 3 serving as an automatic programming system to create a processing program for the laser processor 1, and an NC device 5 to drive the laser processor 1 according to the processing program from the CAM 3.

The NC device 5 is provided with a fingertip operable wireless mouse 7 to input an instruction from a worker.

The wireless mouse 7 and NC device 5 form the correction means.

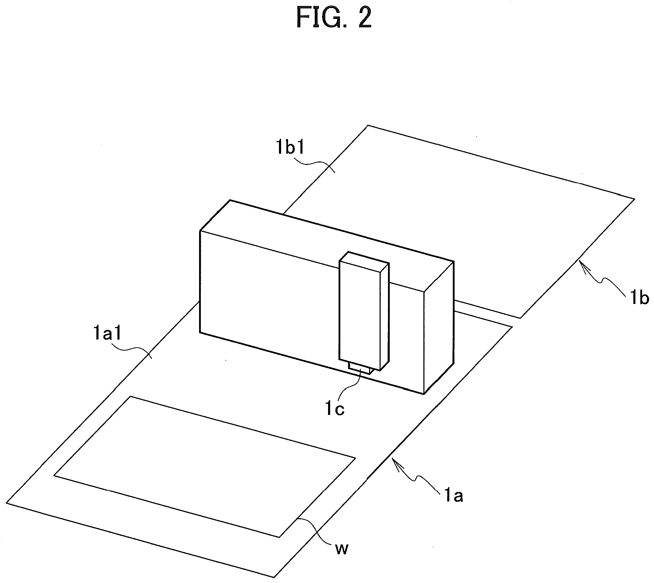

The laser processor 1 is divided into, as shown in Fig. 1, a processing side 1a and a preparation side 1b. As shown in Fig. 2, the processing side 1a has a skid-like processing pallet 1a1 on which a material W is placed. The material W on the processing pallet 1a1 is laser-processed with a freely movable laser head 1c. Also, the preparation side 1b has a skid-like table 1b1 on which a material W is placed.

On the processing side 1a in the vicinity of the preparation side 1b, a projector 1e is arranged.

Figure 2 is a schematic view showing the processing side 1a of the laser processor 1 shown in Fig. 1.

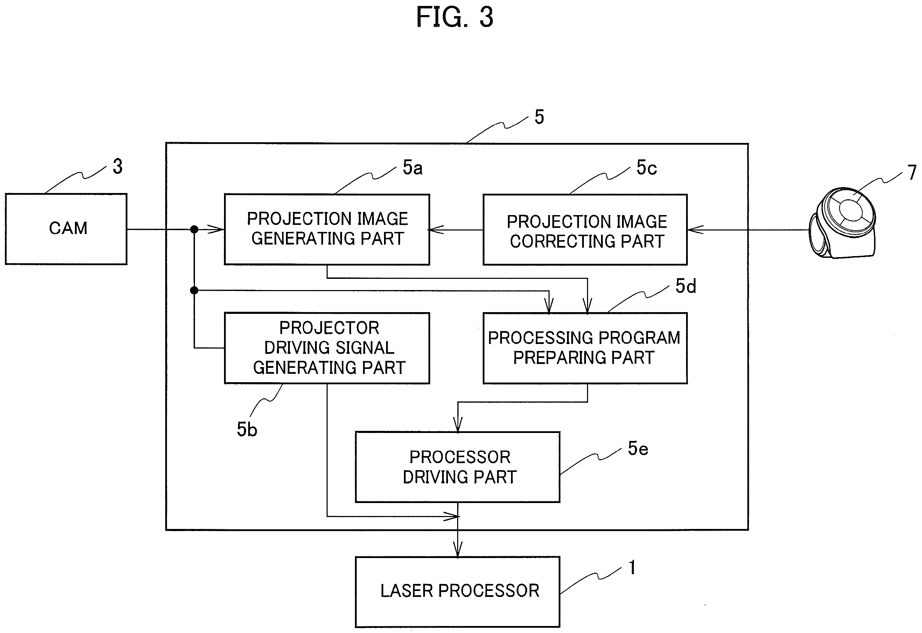

Figure 3 is a functional block diagram showing the NC device 5 shown in Fig. 1.

As shown in Fig. 3, the NC device 5 includes a projection image generating part 5a to generate, according to various information pieces to be explained later, an image to be projected on the material W, a projector driving signal generating part 5b to generate a projector driving signal, a projection image correcting part 5c to move and correct a projection image according to a correction instruction from the worker, a processing program preparing part 5d to prepare a processing program based on the projection image, and a processor driving part 5e to drive the laser processor 1 according to the processing program.

The projection image correcting part 5c corrects a position of the projection image according to a projection image correction instruction provided through the fingertip operable wireless mouse 7 used to input a worker's instruction.

In Fig. 3, the projection image generating part 5a, projector driving signal generating part 5b, projection image correcting part 5c, processing program preparing part 5d, and processor driving part 5e are constituted by exclusive hardware having the respective functions. Instead, the above-mentioned functions may be realized by software run by a CPU having a RAM and ROM.

The projector 1e is configured to project an image of a product to process selectively on the material W on the processing pallet 1a1 of the processing side 1a or on the material W on the table 1b1 of the preparation side 1b. Namely, the projector 1e is configured to project an image of a part to process selectively on the materials placed at different locations.

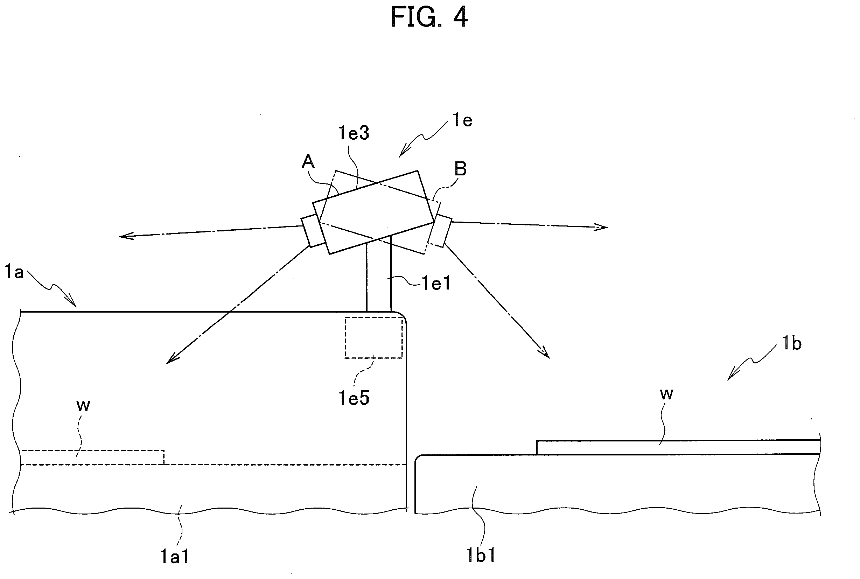

As shown in Fig. 4, the projector 1e includes a support post 1e1 fixed to a top face of the processing side 1a in the vicinity of the preparation side 1b, a projecting part 1e3 arranged on the support post 1e1 and freely rotatable by 180 degrees, and a rotational driving part 1e5 to rotate the projecting part 1e3 by 180 degrees around the support post 1e1. The rotational driving part 1e5 drives the projecting part 1e3 to selectively orient the projecting part 1e3 to a first position A (indicated with a continuous line) to project an image on the material W on the processing pallet 1a1 of the processing side 1a or to a second position B (indicated with a dot-and-dash line) to project an image on the material W on the table 1b1 of the preparation side 1b. The rotational driving part 1e5 includes a motor or the like to rotationally drive the projecting part 1e3 according to a projector driving signal from the NC device 5.

Figure 4 is a schematic diagram showing the projector 1e shown in Fig. 1.

As shown in Fig. 4, the projector 1e according to this embodiment is configured to project, at a given angle, an image C of a part to process selectively on the material W on the processing pallet 1a1 of the processing side 1a or on the material W on the table 1b1 of the preparation side 1b. Instead, any other configuration is employable.

Namely, it is possible to configure so that the projector may project the image C of the product to process from just above one of the material W on the processing pallet 1a1 of the processing side 1a and the material W on the table 1b1 of the preparation side 1b. Alternatively, it is possible to configure so that the projector is moved and set to project the image C of the part to process from just above both the material W on the processing pallet 1a1 of the processing side 1a and the material W on the table 1b1 of the preparation side 1b.

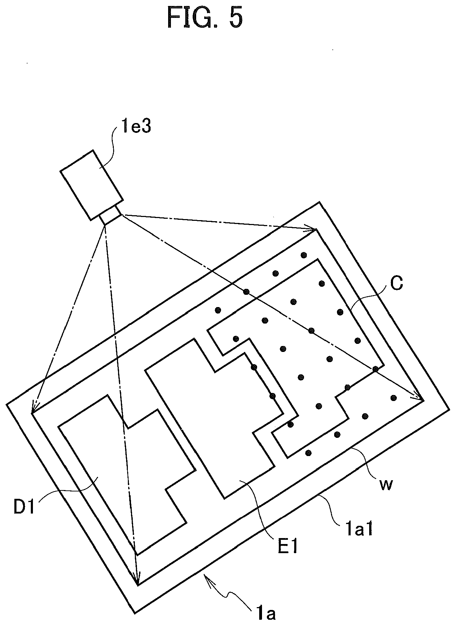

The projector 1e is configured, as shown in Fig. 5, to project by projection mapping the image C of the part to process onto a given position of the material W on the processing pallet 1a1 of the processing side 1a or of the material W on the table 1b1 of the preparation side 1b. In Fig. 5, the material W is a remainder having a hole D1 from which a part D has been cut out and a hole E1 from which a part E has been cut out. Figure 5 shows a situation to project the image C of the part on the material W on the processing pallet 1a1 of the processing side 1a.

Figure 5 is an explanatory diagram showing the situation that the projector 1e projects the image C of the part to process on the material W.

The projector 1e and NC device 5 form the projection means.

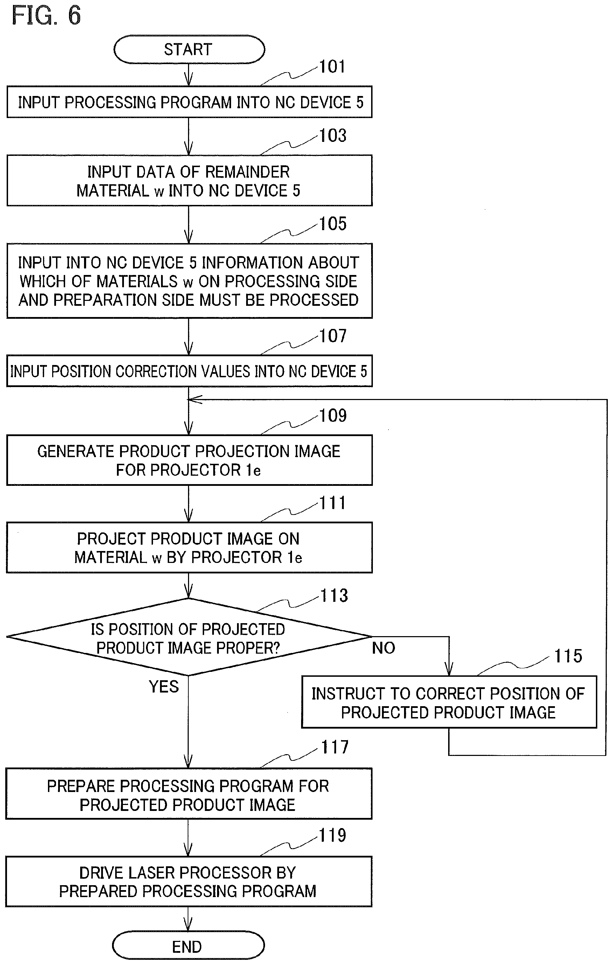

Next, with reference to Fig. 6, the laser processing method embodied according to the present invention will be explained.

Figure 6 is a flowchart showing the laser processing method embodied according to the present invention.

First, in step 101, a processing program generated by the CAM 3 for laser processing to achieve is inputted into the NC device 5. Here, the processing program contains product data and the like including processing range information.

In step 103, a worker inputs data about the material W, which is a remainder, into the NC device 5. Here, the material data contains shape and thickness data and the like of the material W.

Together with this, in step 105, the worker inputs into the NC device 5 information about which of the material W on the processing pallet 1a1 of the processing side 1a and the material W on the table 1b1 of the preparation side 1b must be an object to process and positional information about an object material placing skid of the processing pallet 1a1 or of the table 1b1.

Next, in step 107, the worker inputs into the NC device 5 position correction values that are relational parameters of the projected image from the projector 1e, a processing range, and a laser origin.

In step 109, the NC device 5 generates, according to the inputted processing program, material data, and position correction values, a product projection image signal and projector driving signal for the projector 1e.

Here, for the processing program, a projection height is calculated from the thickness data of the material W, and based on the position correction values and the projection angle information of the projector 1e, a magnification is calculated, adjusted, and set to reduce or enlarge the projection image so that the projection image is displayed at a proper projection location on the material. Then, the projection image signal is generated for the projector 1e.

Namely, the projection image signal for the projector 1e is generated according to boundary information of the product to be drawn with the set magnitude parameter, boundary information of the processing range, and the position correction values.

Also, the NC device 5 generates, according to the information about on which of the processing pallet 1a1 of the processing side 1a and the table 1b1 of the preparation side 1b is used to place the material W, the projector driving signal to drive the projector 1e so that the projector 1e is oriented to the first position A to illuminate the material W on the processing pallet 1a1 of the processing side 1a or to the second position B to illuminate the material W on the table 1b1 of the preparation side 1b.

Also, the projection image signal is generated according to the positional information of the skid of the processing pallet 1a1 or of the table 1b1 so that vertex positions of the skid appear as dots on a projected image. In addition, the projection image signal is generated according to the processible range information related to a movable range of the laser head 1c so that the processible range appears as a line on the projected image.

Here, the skid vertex positions each are projected as given-sized circles to take account of a skid deformation caused by melting or spattering by laser.

If the skid vertex positions interfere with the projected product image, this embodiment generates the projection image signal so that the interfering positions of the skid are displayed with a different color. Differing the colors of the skid vertexes and projected product image from each other enables the worker to distinguish the interference. Alternatively, the skid vertexes and product projection image may simply be displayed with different colors.

It is also possible to project the processible range, i.e., the movable range of the laser head 1c with a different color.

The product projection image signal for the projector 1e is generated by the projection image generating part 5a of the NC device 5 and the projector driving signal is generated by the projector driving signal generating part 5b of the NC device 5.

Next, in step 111, the projector 1e projects on the material W, according to the projection image signal generated by the NC device 5, the product image together with the dot image of the skid vertex positions and the processible range, i.e., the movable range of the laser head 1c.

Namely, at first, the rotational driving part 1e5 of the projector 1e rotationally drives the projecting part 1e3 according to the projector driving signal generated by the NC device 5 and the projecting part 1e3 of the projector 1e projects the product image on the material W according to the projection image signal for the projector 1e generated by the NC device 5.

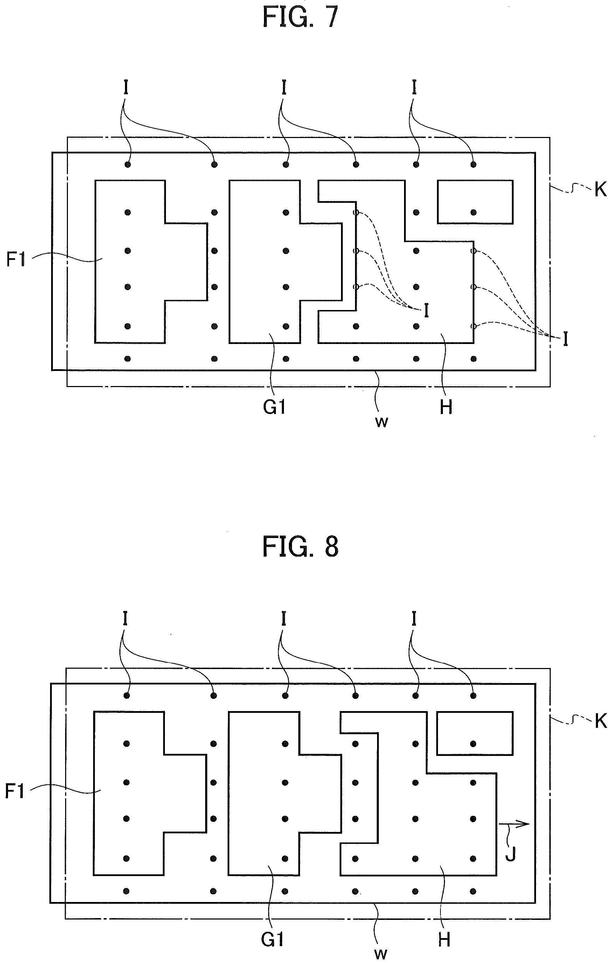

Figure 7 is a schematic plan view showing an example of the product image projected by projection mapping on the material W.

As shown in Fig. 7, on the material W that is a remainder having a hole F1 from which a part F has already been cut out and a hole G1 from which a part G has already been cut out, the product image H is projected by projection mapping. In addition, the skid vertex positions are projected as spots I, and if some skid vertex positions and the projected product image interfere with each other, the interfering skid vertex positions are displayed with a different color. In Fig. 7, the interfering ones of the skid vertex positions I are depicted with dot lines and the processible range K, i.e., the movable range of the laser head 1c with a dot-and-dash line.

Next, in step 113, the worker inspects the product image H projected on the material W and determines whether or not a position of the projected product image H is proper.

Namely, the worker is able to determine whether or not the product image H is positioned on the part cut-out locations. If the skid vertex positions that are projected on the material W as a dot image interfere with the projected product image, this embodiment displays the interfering skid positions with a different color, and therefore, the worker is able to easily determine the interference between the skid vertex positions and the projected product image.

Further, the product image H is projected on the material W together with the processible range K, i. e., the movable range of the laser head 1c, and therefore, it is also possible to confirm whether or not the product image H is within the processible range.

If the skid vertex positions and projected product image interfere with each other or if the projected product image is on the part cut-out locations, i.e., if the position of the projected product image H is improper (NO in step 113), step 115 is achieved.

If the above-mentioned step 113 is NO, an instruction is issued in the step 115 to correct the position of the projected product image H.

Here, the worker uses the fingertip operable wireless mouse 7 to input into the NC device 5 an instruction to move the projected product image H to a proper position.

Namely, to move the product image H projected by projection mapping on the material W, an instruction to shift the projected product image H in a lateral/longitudinal direction or an instruction to rotationally move the projected product image H is inputted through the wireless mouse 7.

For example, as shown in the schematic plan view of Fig. 7, the product image H projected by projection mapping on the material W interferes with the projected image of the skid vertex positions I (those indicated with dot lines). In this case, the wireless mouse 7 is operated to shift the product image H in a lateral direction J by a given distance. Namely, as shown in Fig. 8, the product image H is shifted in the lateral direction J by a given distance so that the skid vertex positions I do not interfere with the projected product image. At this movement, it is possible to confirm whether or not the product image H is moved within the processible range K.

When translating the product image H in the lateral direction J by a given distance, it is possible to change the color of the product image H.

Further, to move the product image H, it is possible to predetermine a moving pitch so that the product image H is moved by the moving pitch whenever a predetermined button of the wireless mouse 7 is clicked once.

Figure 8 is a schematic plan view showing an example of a shifted image of the product projected on the material W by projection mapping. In Fig. 8, the processible range K, i.e., the movable range of the laser head 1c is also depicted with a dot-and-dash line.

This embodiment has explained the case of moving a projected product image so that the projected product image may not interfere with the skid vertex positions I. It is also possible that the worker visually inspects the material W for flaws or spatters that are not known from the data and moves the product image to avoid such flaws or spatters, so that the flaws or spatters are not left on the product.

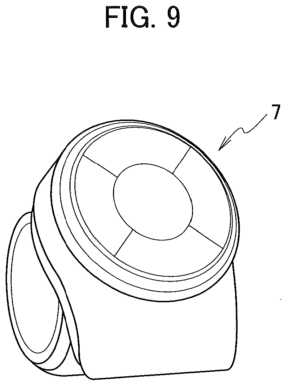

Figure 9 is a schematic view showing the fingertip operable wireless mouse 7.

As shown in Fig. 9, according to this embodiment, the wireless mouse 7 is configured to be worn on a finger of a worker and used by the worker and is provided with various buttons. Namely, it has a shift button to shift the projected product image H in a lateral/longitudinal direction, a button to rotate the projected product image H, and the like. The means to input a worker's instruction into the NC device 5 is not limited to such a wireless mouse but any other configuration is allowed.

Once the instruction to correct the position of the projected product image H is made, the above-mentioned step 109 is resumed in which the NC device 5 generates, based on the instruction made in the above-mentioned step 115, i.e., the instruction to shift the projected product image H in the lateral/longitudinal direction or the instruction to rotationally move the projected product image H, a corrected product projection image signal for the projector 1e.

Here, the generation of the corrected product projection image signal for the projector 1e is made by the projection image correcting part 5c of the NC device 5.

Next, in the above-mentioned step 111, based on the corrected projection image signal generated by the NC device 5, the projector 1e projects the product image together with the dot image of the skid vertex positions on the material W.

Accordingly, in the above-mentioned example, the product image H is projected on the material W as shown in Fig. 8 with the product image H being shifted in the lateral direction J by a given distance so that the projected product image does not interfere with the skid vertex positions I.

Next, in the above-mentioned step 113, the worker inspects the product image H projected on the material W and determines whether or not the position of the projected product image H is proper. If YES (the position of the projected image with respect to the material W is finalized), step 117 is carried out in which the NC device 5 generates and prepares, as processing data, a processing program for the projected product image H.

Namely, when no correction has been made on the product projection image for the projector 1e, the original processing program is adopted, and when the product projection image for the projector 1e has been corrected, the original processing program is modified according to the corrected product projection image and the modified processing program is prepared.

In the above-mentioned example, the product image H has been shifted in the lateral direction J by a given distance as shown in Fig. 8 so that the product projection image does not interfere with the skid vertex positions I. In this case, the positional information is recalculated for the translation, and according to the recalculated positional coordinates, the processing program is prepared.

Here, the processing program is prepared by the processing program preparing part 5d of the NC device 5.

Next, in step 119, the laser processor is driven according to the processing program prepared in the above-mentioned step 117. Here, the processor driving part 5e of the NC device 5 drives the laser processor.

In this way, according to this embodiment, the projector 1e directly projects on a material W an image of a product to process, and therefore, even if a remainder is used as the material W, a worker is able to easily and surely determine whether or not the position of the image of a part to process is proper.

Namely, when using a remainder in which holes have already been made, it is easy to determine whether or not a part to process interferes with the holes and correct a processing program so that the part to process does not interfere with the holes.

Further, when a laser processing trace overlaps vertexes of a skid to support a material like the above-mentioned embodiment, it is easy to determine the overlapping of the laser processing trace with the material supporting skid vertexes and correct a processing program so that the laser processing trace does not overlap the material supporting skid vertexes.

The present invention is not limited to the above-mentioned embodiments and is achievable in other forms by making proper modifications on the present invention.

Namely, the device to input worker's instructions into the NC device 5, such as an instruction to shift a projected product image in a lateral/longitudinal direction or an instruction to rotationally move the projected product image is not limited to the fingertip operable wireless mouse. It may be, for example, an NC operating screen, a tablet, a pulse generator, or the like.

Further, although the embodiment projects a product image on one piece of material, it is possible to use the present invention to project a product image on each of a plurality of materials.

### [Industrial Applicability]

According to the present invention, it is possible to efficiently lay out a product on a remainder so that no processing defects occur.

## Claims

1. A laser processing method for irradiating a material with a laser beam and laser-processing the material (W), comprising:
projecting, by a projection means (1e), an image (H) of a product to process on the material (W) and an image of vertex positions (I) of a processing pallet skid (1a1) on which the material (W) is placed;
determining whether or not the projected product image interfere with the skid vertex positions; and
moving and correcting, by a correction means (7 and 5), the projected image (H) on the material (W) according to a projection image correction instruction provided through inputting a worker's instruction so that the projected product image does not interfere with the skid vertex positions,
wherein after determining a position of the projected image (H) with respect to the material (W), processing data is corrected and generated in accordance with the position of the corrected projected image (H).

2. A laser processing system (1) for irradiating a material (W) with a laser beam and laser-processing the material (W), comprising:
a projection means (1e) configured to project on the material an image (H) of a product to process; and
a correction means (7 and 5) configured to move and correct the image (H) projected by the projection means (1e),
wherein the system is configured to perform the method of claim 1.

3. The laser processing system (1) according to claim 2, wherein the correction means (7 and 5) shifts or rotates the image (H) projected by the projection means (1e).

4. The laser processing system (1) according to claim 2, wherein the material (W) is a remainder that occurs after processing a product, and on the remainder, the image (H) of the product to process is projected to determine whether or not a processing position of the product to process is appropriate.

5. The laser processing system (1) according to claim 2, wherein the projection means (1e) projects the image (H) of the product to process selectively on materials placed at different locations.

## Patentansprüche

1. Laserbearbeitungs-Verfahren zum Bestrahlen eines Materials mit einem Laserstrahl und Durchführen von Laserbearbeitung des Materials (W), umfassend:
Projizieren eines Bildes (H) eines zu bearbeitenden Erzeugnisses auf das Material (W) und eines Bildes von Scheitelpositionen (I) eines Bearbeitungs- Werkstückträgerschlittens (processing pallet skid) (1a1), auf dem das Material (W) angeordnet ist, mittels einer Projektionseinrichtung (1e);
Feststellen, ob das projizierte Bild des Erzeugnisses sich mit den Schlitten-Scheitelpositionen überlagert; sowie
Bewegen und Korrigieren des projizierten Bildes (H) auf dem Material (W) mittels einer Korrektureinrichtung (7 und 5) entsprechend einem Befehl für Korrektur des Projektionsbildes, der über Eingabe einer Anweisung einer Bedienungsperson bereitgestellt wird, so dass das projizierte Bild des Erzeugnisses sich nicht mit den Schlitten-Scheitelpositionen überlagert,
wobei nach Bestimmen einer Position des projizierten Bildes (H) in Bezug auf das Material (W) Verarbeitungsdaten entsprechend der Position des korrigierten projizierten Bildes (H) korrigiert und erzeugt werden.

2. Laserbearbeitungs-System (1) zum Bestrahlen eines Materials (W) mit einem Laserstrahl und Durchführen von Laserbearbeitung des Materials (W), umfassend:
eine Projektionseinrichtung (1e), die so ausgeführt ist, dass sie ein Bild (H) eines zu bearbeitenden Erzeugnisses auf das Material projiziert; sowie
eine Korrektureinrichtung (7 und 5), die so ausgeführt ist, dass sie das durch die Projektionseinrichtung (1 e) projizierte Bild (H) bewegt und korrigiert,
wobei das System zum Durchführen des Verfahrens nach Anspruch 1 ausgeführt ist.

3. Laserbearbeitungs-System (1) nach Anspruch 2, wobei die Korrektureinrichtung (7 und 5) das durch die Projektionseinrichtung (1e) projizierte Bild (H) verschiebt oder dreht.

4. Laserbearbeitungs-System (1) nach Anspruch 2, wobei das Material (W) ein Rest ist, der nach Bearbeiten eines Erzeugnisses anfällt, und auf den Rest das Bild (H) des zu bearbeitenden Erzeugnisses projiziert wird, um festzustellen, ob eine Position zum Bearbeiten des zu bearbeitenden Erzeugnisses geeignet ist.

5. Laserbearbeitungs-System (1) nach Anspruch 2, wobei die Projektionseinrichtung (1e) das Bild (H) des zu bearbeitenden Erzeugnisses selektiv auf Materialien projiziert, die sich an verschiedenen Stellen befinden.

## Revendications

1. Procédé de traitement par laser permettant d'illuminer un matériau avec un faisceau laser et de traiter par laser le matériau (W), comprenant :
la projection, grâce à un moyen de projection (1e), de l'image (H) d'un produit à traiter sur le matériau (W) et de l'image des positions de sommets (I) d'un patin de palette de traitement (1a1) sur lequel est placé le matériau (W),
la détermination de ce que l'image de produit projetée interfère ou non avec les positions des sommets du patin, et
le déplacement et la correction, grâce à des moyens de correction (7 et 5), de l'image (H) projetée sur le matériau (W) en fonction d'une instruction de correction d'image de projection délivrée par l'intermédiaire de la saisie d'une instruction d'ouvrier de sorte à ce que l'image du produit projetée n'interfère pas avec les positions des sommets du patin,
dans lequel, après avoir déterminé la position de l'image (H) projetée par rapport au matériau (W), le traitement des données est corrigé et généré en fonction de la position de l'image (H) projetée corrigée.

2. Système de traitement par laser (1) permettant d'illuminer un matériau (W) avec un faisceau laser et de traiter par laser le matériau (W), comprenant :
un moyen de projection (1e) configuré pour projeter sur le matériau l'image (H) d'un produit à traiter, et
des moyens de correction (7 et 5) configurés pour déplacer et corriger l'image (H) projetée par le moyen de projection (1e),
le système étant configuré pour réaliser le procédé décrit dans la revendication 1.

3. Système de traitement par laser (1) selon la revendication 2, dans lequel les moyens de correction (7 et 5) font se décaler ou tourner l'image (H) projetée par le moyen de projection (1e).

4. Système de traitement par laser (1) selon la revendication 2, dans lequel le matériau (W) est une partie restante qui apparaît après le traitement d'un produit, et, sur la partie restante, l'image (H) du produit à traiter est projetée pour déterminer si une position de traitement du produit à traiter est ou non appropriée.

5. Système de traitement par laser (1) selon la revendication 2, dans lequel le moyen de projection (1e) projette l'image (H) du produit à traiter sélectivement sur des matériaux placés à des emplacements différents.
